Europäisches Patentamt

European Patent Office

Office européen des brevets

(19)

(11) EP 0 945 992 A1

(12) EUROPEAN PATENT APPLICATION

(43) Date of publication:
29.09.1999 Bulletin 1999/39

(51) Int. Cl.$^6$: H04B 1/707, G06F 15/80

(21) Application number: 98302392.0

(22) Date of filing: 27.03.1998

(84) Designated Contracting States:
AT BE CH DE DK ES FI FR GB GR IE IT LI LU MC
NL PT SE
Designated Extension States:
AL LT LV MK RO SI

(71) Applicant:
TTP Communications Limited
Royston, Hertfordshire, SG8 6EE (GB)

(72) Inventors:
• Evans, Martin Robert
Great Shelford, Cambridge CB2 5BG (GB)
• Harrold, William Basil
Haslingfield, Cambridge CB3 7LE (GB)

(74) Representative:
Brunner, Michael John
GILL JENNINGS & EVERY
Broadgate House
7 Eldon Street
London EC2M 7LH (GB)

(54) CDMA array processor

(57) An array processor (1) for processing a CDMA signal comprises means for generating offset spreading sequences, a plurality of processing elements (2) arranged in a plurality of columns (11), means for providing a sampled CDMA signal to the columns (11) and a controller (3) for providing a code signal for each column (11). The elements (2) of each column (11) receive the sampled CDMA signal in parallel and the code signals are clocked serially down each column (11). The code signals include offset spreading sequences and each element (2) correlates samples of the CDMA signal with the code signals.

Figure 1

**Description**

The present invention relates to the field of Code Division Multiple Access (CDMA) transmissions, and, more particularly, to a processor for decoding a CDMA signal.

CDMA is a form of spread spectrum communication, the core principles of which are the use of noise-like carrier waves and bandwidths much wider than those required for simple point-to-point communication at the same data rate. CDMA systems spread the signal and separate communication channels by means of pseudo-random modulations in the digital domain. For example, in the IS-95 standard signals are spread and separated by applying a pseudo-noise (PN) sequence at different offsets.

A CDMA processor must carry out the operations of searching and demodulation. Searching for a CDMA pilot tone involves the correlation of a received signal with potentially all possible spreading sequence offsets over a large number of input samples. As the spreading sequences used may be very long (32,768 chips for IS-95 transmissions) and the chip rates may be high (1.2288 Mchips/sec for IS-95), searching requires very high processing speeds to allow the search to be completed within a reasonable time. The performance required for a search time of a few seconds in IS-95 is of the order of a few billion operations per second.

Demodulation of the signal, once the pilot is found, requires a slower performance, although the basic operation to be performed on the received signal is substantially the same.

The most important features of a CDMA processor, particularly if used in mobile communication systems, are speed, gate count and power dissipation. The speed must be sufficient to make operations such as pilot tone searching reasonably quick, ie a few seconds for most applications. The gate count must be sufficiently low to allow the processor to fit onto a communications chip without increasing the size beyond reasonable limits whilst maintaining processing speed. The power dissipation must be as low as possible in order to make the processor usable in portable equipment that is expected to have a long stand-by and talk time.

According to the present invention there is provided an array processor for processing a CDMA signal comprising:

    means for generating offset spreading sequences;
    a plurality of processing elements arranged in a plurality of columns;
    means for providing a sampled CDMA signal to the columns, the elements of each column receiving the signal in parallel; and
    a controller for providing a code signal for each column, the code signals being clocked serially down each column;

wherein the code signals include offset spreading sequences and each element correlates samples of the CDMA signal with the code signals.

It can be appreciated that each element in a column receives the sampled signal at the same time, whereas each code signal is clocked through the columns causing a delay at each element. Thus each column correlates the sampled signal with a number of spreading sequence offsets simultaneously.

The processor may further comprise means for generating user codes and the controller may then selectively generate code signals comprising a combination of a user code and the offset spreading sequences.

The processing elements may each be a serial processor.

The means for providing a sampled CDMA signal may provide the sampled CDMA signal and its inverse to the columns. This simplifies the computation to be carried out by the elements.

The controller may also selectively turn off all but one element of a column when that column is used to demodulate a component of the CDMA signal.

The means for generating offset spreading sequences may comprise:

    a generator for generating a reference PN sequence having an interpolated extra zero bit; and
    means for shifting the reference PN sequence to generate an offset PN sequence for each column, wherein the means for shifting the reference PN sequence advances and retards the reference PN sequence in order to delete the interpolated extra zero bit, and interpolates an extra zero bit in each offset PN sequence.

Alternatively, the means for generating offset spreading sequences may comprise:

    a memory for storing a PN sequence; and means for addressing the memory to retrieve the PN sequence at the desired offset.

The means for generating user codes may comprise means for combining Walsh codes having lengths whose product equals N to provide user codes comprising Walsh codes of length N.

The array processor is therefore able to process the CDMA signal efficiently in accordance with the above mentioned requirements. A host processor may perform other less demanding processing and control functions.

Also according to the present invention there is provided a method of processing a CDMA signal comprising the steps of:

    generating offset spreading sequences;

providing a sampled CDMA signal to a plurality of columns of serial processing elements, the elements of each column receiving the signal in parallel;

providing a code signal to each column and clocking the code signals serially down each column;

wherein the code signals include the offset spreading sequences and each element correlates samples of the CDMA signal with the code signals.

An example of the present invention will now be described with reference to the accompanying drawings in which:

Figure 1 is a block diagram illustrating an array processor;

Figure 2 is a block diagram illustrating the algorithm carried out on the received signal during searching;

Figures 3 is a phase diagram for the in-phase and quadrature components of a CDMA signal;

Figure 4 is a block diagram illustrating the algorithm carried out on the received signal during demodulation;

Figure 5 is a block diagram illustrating a processor element of the array processor of Figure 1;

Figure 6 is a block diagram illustrating a shift and add offset PN sequence generator;

Figure 7 is a block diagram illustrating a memory based PN sequence generator;

Figure 8 is a timing chart showing PN sequence offsets;

Figure 9 is a block diagram illustrating a first Walsh function generator;

Figure 10 is a block diagram illustrating of a second Walsh function generator;

Figures 11 and 12 are timing charts showing output data alignment; and

A processor designed to support IS-95 and other Code Division Multiple Access (CDMA) transmissions requires far greater processing capabilities than those required by, for example, GSM transmissions. The processing power of most conventional mobile communications chips is therefore not sufficient to support CDMA directly. Also, an entirely software-based solution requires processing cores of large power and is therefore not practical. In this example of the invention, a co-processor is integrated with a conventional communications processor, thus providing the computational resources needed to implement IS-95 and other CDMA standards although it is clear that distribution of the various processing functions may be achieved in a number of ways.

Under IS-95, modulation of the transmission is carried out by Quadrature Phase Shift Keying (QPSK) with a chip rate of 1.2288MHz. Spreading is carried out by combination with a pseudo-noise (PN) sequence of length 32,768 chips and Walsh codes. The data sampling resolution is at quarter chip rate, (ie. about 4.9MHz) with a conversion resolution of 8 bits.

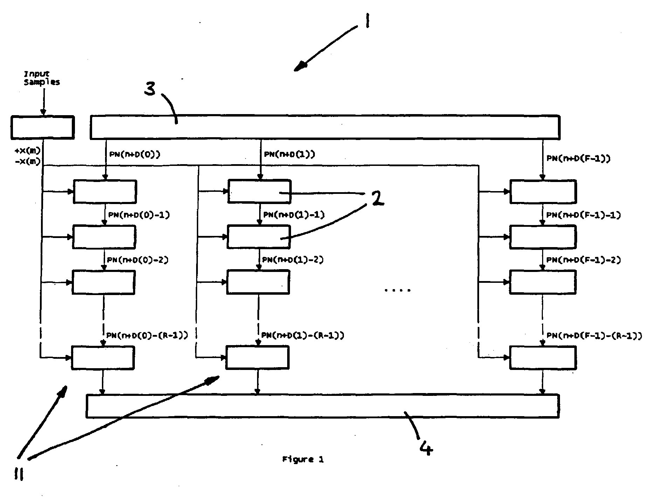

Referring to Figure 1, the co-processor takes the form of an array processor 1, which is suitable for processing CDMA signals as it can conveniently carry out a high speed correlation tasks which are the basic requirements for the two operations of searching and demodulation. Each element 2 of the array processor 1 accumulates the product of the input samples and the PN sequence at a certain offset, enabling the array processor 1 to correlate the input signal over a range of PN offsets. There are far more possible PN offsets in a conventional CDMA system such as IS-95 than the number of elements 2 that it is practical to provide in the array processor. Thus, when searching for a pilot tone, in order to cover all possible PN offsets, it is necessary to run the correlation over a certain range of offsets, collect the results, and then run the correlation again over another range of offsets and so on, until the all the possible PN offsets are covered or the desired offset has been located.

The input samples, at quarter chip resolution, arrive at a receiver at a rate of 4x1.2288MHz, which is roughly 4.9MHz. The capacity of silicon for high clock rates is utilised to reduce the size of each processing element 2 to a 1 bit processor which performs calculations serially, thus allowing the provision of a large number of elements 2 into a given silicon area. As the word length is 8 bits then the clock frequency is about 40MHz.

As shown in Figure 1, when the serialised data samples reach the processor 1, the first operation performed on each one is a multiplication by 1 or -1. This may be simplified by pre-computing the complement of each data sample and serialising both the true and complemented samples. The data samples are then multiplied with the data stream provided by the controller 3 by a single bit process in each of the elements 2 of the co-processor 1.

In Figure 1:

m is the index of a sample at quarter chip rate;
X(m) is the complex input sample, digitised to 8 bits;
PN(n) is the n'th pair of values in the PN sequence;
D(p) is the offset for the p'th column 11;
F is the number of columns 11;
R is the number of rows;

and $m = 4n + k$, where $k = 0$ to $3$.

The input samples are serialised and distributed to all the elements 2 of the processor 1 at quarter-chip rate. The controller feeds each column 11 of the array with an offset PN sequence containing two streams, one stream for the in-phase component of the signal and the other for the quadrature component, and the offset of each column's PN sequence is specified by the controller 3. These streams are clocked through the columns 11 at chip rate. Within each column 11, the PN sequence is delayed one chip period by each element 2 so that the offset increases for elements 2 situated at subsequent positions down the column 11. Computations are performed on one of the four quarter-chip phases (ie a set value of k from 0 to 3) so that correlations may be performed to quarter-chip resolution. The value of k may be set independently for each column 11. Results from the elements 2 are shifted serially down each column 11, through the subsequent elements 2, and collected in the buffer 4 at the bottom of the array.

The controller 3 has generators for the offset PN sequences and the user's Walsh sequence. The buffer 4 includes means for collecting the results from the array, aligning the results and returning them to the host communications processor. The elements 2 are able to perform the required correlations when the processor 1 is being used to search for a pilot tone and also when it is being used for demodulation.

A CDMA signal is encoded using the QPSK scheme in which the two streams of symbols are used to shift by 0° and 180° the phase of the in-phase and quadrature components, respectively, of a carrier frequency. These two data streams are denoted by the letters 'i' and 'q'.

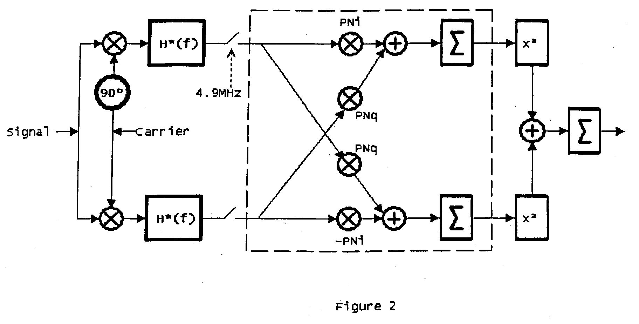

During searching a CDMA receiver looks for a pilot tone, containing no data, which is spread across the spectrum using two orthogonal PN sequences. Referring to Figure 2, in order to perform QPSK demodulation, the incoming signal is brought down to base bond I and Q in the normal manner and then passed through a pair of matched filters. It is then sampled at four times the chip rate and digitised to eight bit resolution. The digitised signal must then be multiplied by the two PN sequences and accumulated over a large number of samples in order to recover the pilot tone, supposing that the correct PN offset has been chosen. As the phase of the incoming signal is not known, a simple multiplication for each component may not work as each component will contain a pseudo-random noise component arising from "cross-coupling" from the other component. However, the scheme shown in Figure 2 removes the effect of the carrier phase.

The signal components are then squared and added in order to find the magnitude. As these operations are done at a much lower rate than the correlation, being applied to the results of summations, they are carried out by a host communications processor. The dashed line shows the part of the computation that takes place within the array processor 1. When the pilot has been located, its phase is computed from the relative magnitudes of the two components of the pilot tone.

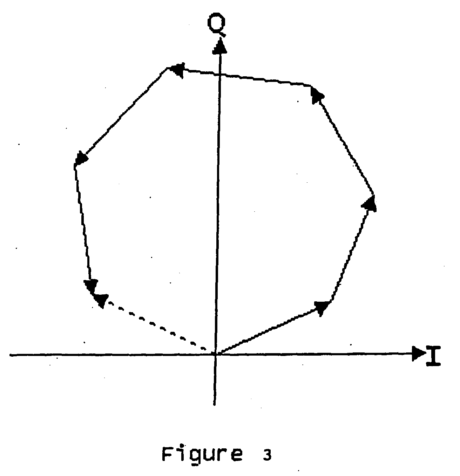

The process therefore performs a coherent search for the pilot over a number (N) of samples. It should be noted that there may be a small frequency error in the demodulating carrier which will cause the phase, $\phi$, to change linearly with time. Over a sufficiently large N this phase variation could cause the accumulation to sum to zero, or thereabouts, rendering the search useless, as illustrated in Figure 3. In order to carry out a search over a sufficiently large number of samples without encountering this problem, a number (L) of coherent searches are carried out, their magnitudes computed and the results added non-coherently. This allows a search to be carried out over a sufficiently large number (N x L) of input samples without suffering the effects of small frequency errors.

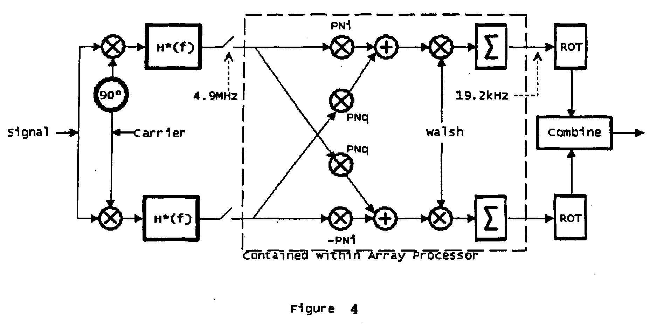

The algorithm for decoding a signal with a known PN offset, shown in Figure 4, is slightly different, although the initial cross-coupled multiplication is the same. This allows the signal to be demodulated regardless of carrier phase, removing the need for a derotator operating at the chip rate. Also, after the two signal components have been multiplied by the PN sequences they are to be multiplied by the user Walsh code in order to reveal the transmitted signal. The I and Q components are then summed over 64 chips to yield the 19.2kHz symbol stream.

The symbol stream is then de-rotated by the known carrier phase and, after de-rotation, the two components should be the same and can be added together to produce a 19. 2kbit/s data stream. Several data streams from different multipath components of the signal may be then be added to exploit diversity and improve the signal to noise ratio. The buffer carries out the derotation, and the dashed line of Figure 4 shows the part of the algorithm which is carried out by the array processor 1.

The graphical expressions in Figures 2 and 4 of the algorithms embodied within the array processor are very similar. The only difference between the two, as far as the array processor is concerned, is the additional multiplication of the user Walsh code for the signal demodulator. The distributive property of multiplication over addition enables the two PN sequences and the Walsh code to be multiplied before multiplying the signal components. The controller 3 therefore combines the PN sequences and the Walsh code for demodulation operations, and the algorithms carried out by the processing elements 2 are exactly the same for searching and demodulation. Any other differences between the two algorithms occur in those parts of the algorithms carried out by the host communications processor and thus do not concern the array processor 1.

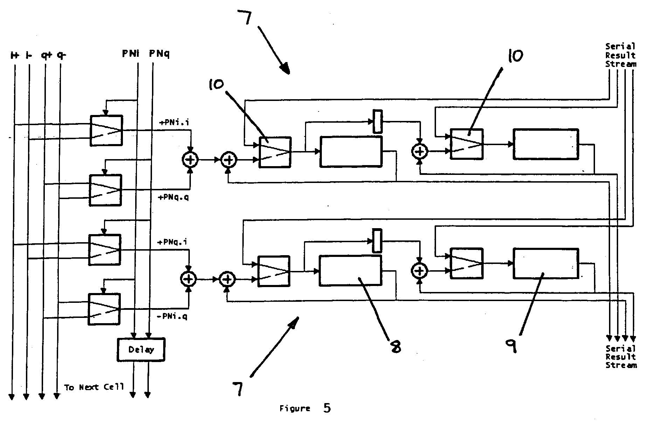

Each processing element 2 contains four multipliers and two adders, all of which operate serially. The multipliers are single bit data selectors which choose between two streams of serial data, one carrying the true value and the other the complement of that value, and this is done for both the in-phase (i) and quadrature (q) components. The four data streams required are distributed to each processing element 2, as shown in Figures 1 and 5.

The two PN sequence streams required for each processing element 2 are delayed by one clock period at each element 2 and then pass to the next element 2 in the same column 11. The PN sequences select which of the four serial input data streams pass to the accumulators 7, of which there are two; one for the i component and the other for the q component. Each accumulator 7 in general may be longer than the word length of the input samples. For example, if the input data are digitised to 8 bits, each accumulator 7 is 16 bits long, allowing "headroom" for the accumulation. The accumulators 7 are pipelined by being split into two halves, each half being preceded by a single bit serial adder. As the last bit of each input sample is added into a result accumulator 8, it is stored in a sign extension register 9. During the addition of the next input sample, the sign extension register 9 can have the sign extension added to it. The two halves of the 16-bit accumulator 7 are thus one sample out of phase, but this can be corrected just before the contents of the accumulators 7 are shifted out, by clocking an extra 8 zero bits into the array. This allows the last sign extension to take place without modifying the contents of the results accumulators 7.

Multiplexors 10 are incorporated into the accumulators 7, between adders and shift registers to allow results to be clocked out serially either at the end of the computation (for searching) or during the computation (for demodulation). These multiplexors 10, and local enables for the clock, are controlled by a few mode bits which are shifted serially into each column 11 and transferred into holding latches in order to update the mode. The multiplexor control lines result in each processing element 2 being an accumulator or a delay line for passing on results. The clock enables allow the accumulation of data to be timed so that the correct input samples are summed and for individual processing elements 2 to be turned off when not required in order to save power.

The PN sequences are each 32,768 bits long and are conventionally generated using 15-bit maximal length shift registers, with a extra zero state added, according to the IS-95 standard, after the fourteenth zero in the sequence has been generated, converting a run of fourteen zeroes into a run of fifteen zeroes. There are two orthogonal PN sequences to be generated and each column 11 of processing elements 2 needs a pair of PN sequences with independently controllable offset.

There are shown two possible methods for PN sequence generation. The first uses a pair of reference PN generators (one for the I component and one for the Q component) and generates the separate PN sequences for each column 11 by offsetting the reference sequences using the shift-and-add property of linear feedback sequences. The other uses a memory based method, in which the two PN sequences are stored in memory and can be accessed at any offset by the controller 3 for providing to each column 11.

The shift-and-add method offers the advantage of not requiring any look-up table memory but requires more "housekeeping" on the part of the host processor and takes much longer to respond to a change in sequence offsets. It is possible to generate PN sequences of any desired offset by using the shift-and-add property of maximal length shift register sequences to generate all the desired sequences from one pair of shift registers. However, this approach is complicated by the need to insert an extra zero state to extend the length of the sequence from 32767 to 32768. This unfortunately makes it impossible to use the shift and add property in a simple way as the addition of the extra zero must be handled separately for each shifted sequence. An alternative to this is to have a separate pair of generators for each column 11. However, setting the generators to have specific offsets relative to each other is still non-trivial, because of the difficulty in synchronising the setting of the generators' initial conditions relative to one another.

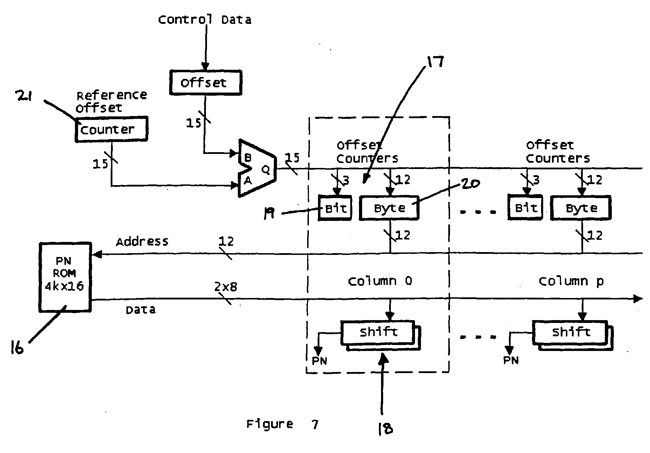

A PN sequence generator 12, incorporated within the controller 11, which utilises the shift-and-add method is illustrated in Figure 7. The generator 12 generates a single PN sequence at different offsets for each column 11. The generator 12 is duplicated to provide both the I and Q sequences.

The generator 12 is split into two parts. The reference generator 15 generates a standard PN sequence of length $2^{15}$-1 and counts the number of zeroes generated. A comparator 13, looking at the output of the counter, signals the appearance of the fourteenth zero. This indication passes to an edge detector 14, formed by a delay element, an inverter and an AND-gate. This causes the shift register to be inhibited for one clock, prolonging the fourteenth zero to create a fifteenth zero. The contents of the feedback shift register and the comparator output (after being delayed) are passed to the head of each column 11 of processing elements 2.

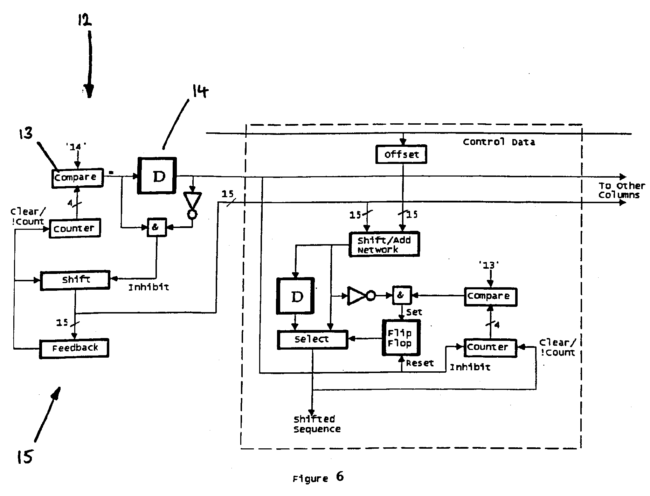

It is not sufficient simply to apply the shift-and-add method of shifting the sequence to the augmented PN sequences generated by the reference generator 15. The interpolation of the extra zero by the reference generator 15, in general, does not map onto the point at which an extra zero is required in the shifted sequences. It is therefore necessary to advance each shifted sequence as the extra zero is interpolated into the reference sequence, in order to skip over it, and then retard the sequence again as its own extra zero is interpolated, to bring the sequences back into line. For each column 11, it is therefore necessary to count the zeroes in the shifted sequence, interpolate a supplementary zero, and switch in and out of the shifted sequence a delay to advance and retard the shifted sequence as necessary relative to the reference sequence. The mechanism for achieving this is shown in Figure 6.

When the offset is changed, there is potentially a long period before a sequence of the correct offset is generated. This is because the phase of the advance/retard mechanism may be wrong when the change is made and so the generated sequence may be offset by one clock period from the desired offset. This will correct itself after at most $2^{15}$-1 clock periods

(~30ms).

As shown in Figure 7, the memory based method uses pre-computed PN sequences which are stored in a Random Access Memory (RAM) or Read-Only Memory (ROM) 16. Sequences of any desired offset are supplied by reading the right range of memory locations, and the same memory can provide sequences for all the columns 11. In this method, each column 11 must maintain its own sequence memory address counter. In this example, the PN sequence ROM 16 has 4k words, each of 16 bits. The lower 8 bits of each word contain the in-phase PN sequence and the upper 8 bits contain the quadrature PN sequence. This requires 4k words of 16 bits each, each sequence consisting of 32,768 bits.

The controller has an offset counter 17 and a pair of 8-bit shift registers 18 associated with each column 11 of processing elements 2. The offset counter 17 is split into a 3-bit bit counter 19 and a 12-bit byte counter 20. On every eighth chip period, counted by the bit counter 19, every column 11 has its shift register filled from the PN sequence ROM 16, using the byte counter 20 to supply the address. The byte counter 20 is then incremented. Once the offset counters 17 have been initialised they remain in step, maintaining fixed offsets relative to each other. From time to time the offset for a particular column 11 of processing elements 2 needs to be changed. If the register were simply to be written by the host processor, the timing of the write operation would have to be very precise to maintain the correct relative offsets. A mechanism is therefore provided to ensure synchronism is maintained across all the offset counters 17. This mechanism relies on a reference counter 21 which is incremented at chip rate. All offsets are defined relative to this arbitrary reference. When a new offset is to be written, it is added to the contents of the reference counter 21 plus one before being written to the relevant offset counter 17. The 3-bit bit counter 19 counts the PN sequence bits out of the shift registers 18, triggering a read of the PN sequence ROM 16 after each eighth bit. When an offset is changed this counter serves to resynchronise the PN sequence ROM 16 fetches with the new offset value.

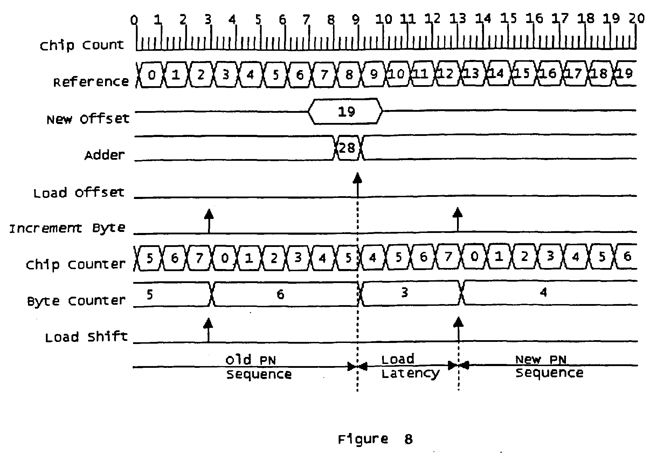

The process of changing a PN offset is illustrated by the timing diagram shown in Figure 8. The reference counter runs continuously, as shown in the second row of Figure 8, and rolls over to zero when it reaches 32,768. In the diagram the offset starts at 45 (5x8+5), and the byte counter 20 may be seen to increment as the bit counter rolls over to zero. When a new offset is to be written, in this case 19, the reference offset is added to the new offset and the result loaded into the offset counter 17, the bottom 3 bits being loaded into the bit counter 19 and the rest being loaded into the byte counter 20. Next time the bit counter 19 rolls over to zero, the shift register 18 will be loaded with the first 8 chips' worth of the newly offset PN sequence. The worst case latency, from loading a new offset to seeing the newly offset sequence, is 8 chips.

For signal demodulation, the generated PN sequences are combined, by adding modulo-2, with a Walsh code sequence before being sent down a column of the array. The Walsh code may, in general, be different for each column. Each Walsh code is 64 bits long and there are 64 different codes to choose from. In one example, these are stored in a 4096-bit look-up table and a 6-bit index is used to select the appropriate table entry. A 6-bit counter then addresses the table to generate the required code.

In another example, the host processor writes a 64-bit value directly into a shift register, the contents of which are then clocked out and re-circulated to generate the code.

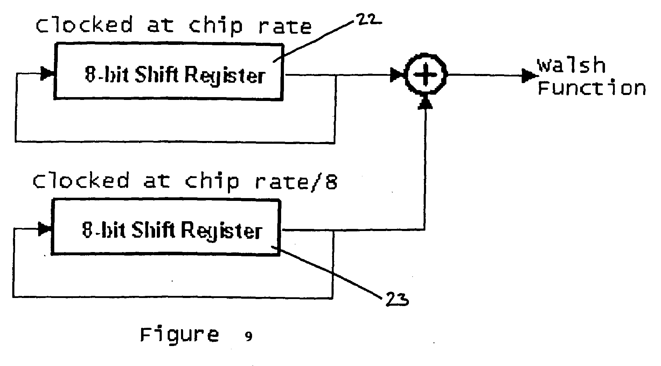

In the preferred example shown in Figure 9, no look up table is required, and, furthermore, the need for a long shift register is avoided. In this example, the structure of Walsh codes is exploited to generate any specified code by repeating the same 8-bit sequence 8 times, each repetition being either inverted or left non-inverted. Two shift registers 22 and 23 are loaded by the host processor, one with the repeated 8-bit sequence and the other with 8 bits specifying which repetitions are inverted. The repeated sequence shift register 22 is clocked at the chip rate and its output, as well as being re-circulated, is added modulo-2 to the output of the second shift register 23. The second shift register 23, which is also recirculated is clocked at one eighth of the chip rate, and contains bits which may invert the repeated sequence from the first shift register. By loading the appropriate values into these two shift registers any of the 64-bit Walsh functions may be generated.

As there are 64 different Walsh codes, there are only eight different valid values which may be loaded into each of the two shift registers 22 and 23. These eight values are the same for both registers and are, in fact, a set of eight-bit Walsh functions. They are listed below:

```
0  0  0  0  0  0  0  0
0  1  0  1  0  1  0  1
0  0  1  1  0  0  1  1
0  1  1  0  0  1  1  0
0  0  0  0  1  1  1  1
0  1  0  1  1  0  1  0
0  0  1  1  1  1  0  0
0  1  1  0  1  0  0  1
```

If the Walsh code is described by a 6-bit number, the upper three bits may be used to index into the above table to find the value for the first shift register 22 and the lower three bits may be used as the index for the second shift register 23. The leftmost bit is the leading bit. This table itself may be generated in a similar way, allowing the Walsh functions to be specified more succinctly, at the cost of greater circuit complexity. However, the example described above provides a compromise between circuit complexity and the amount of host processor support required. Furthermore, 16 bits is a convenient size for data to be passed from the host processor to the array processor 1.

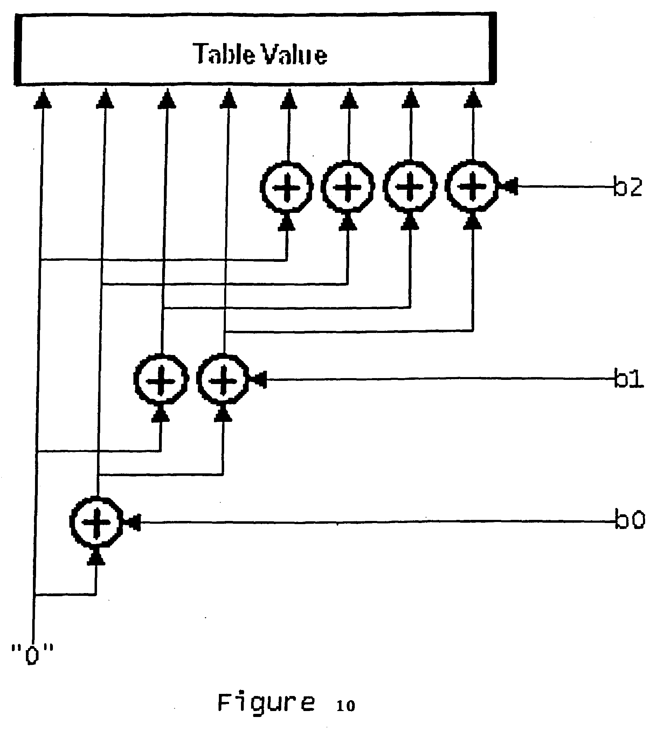

In another example, instead of using a table to look up the eight values shown above, the values may be generated as shown in Figure 10, where b0, b1 and b2 are the three bits of the look-up table index.

For demodulation the Walsh codes must align with the PN sequences, the start of the Walsh code being coincident with a 64-bit boundary in the PN sequence. This is achieved by stopping the shift registers when they are loaded by the host processor and then starting them again on a 64-bit boundary of the accompanying PN sequence. This means that there is a maximum latency of 64 chips (average 32 chips or 26$\mu$s) for a change in Walsh code. Each column 11 of processing elements 2 has its own Walsh code generator.

When the array processor 1 is demodulating a signal, typically several columns 11 of processing elements 2 are used to demodulate a number of multi-path components. Each of these components is also subject to different delays and possibly different Doppler effects. Each component thus requires a different PN sequence offset and a different carrier phase. In addition, the offset and carrier phase may vary with time. These variations may be tracked by carrying out periodic limited searches for each component's pilot tone, and one or more columns 11 may be reserved for this purpose. Each demodulated component thus has at any time a certain delay and carrier rotation associated with it. Before all the demodulated components can be combined to provide a composite signal, they need to be deskewed and derotated relative to each other. Derotation is carried out by the host processor. However, deskewing is carried out in part by the array processor 1.

The delay of one component relative to some arbitrary reference may be considered to have three components: fractional chip offset, expressed in this example in quarter chips; integral chip offset, expressed as a difference in the PN sequence offset; and Walsh symbol offset, expressed in quanta of 64 chips.

In order to make best use of the combination of the array processor 1 and host processor, the array processor deals with the high speed part of the computation and the host processor deals with low data-rate processing. For deskewing, this means that the array processor is responsible for the fractional and integral chip offsets and the host processor is responsible for the Walsh symbol offset.

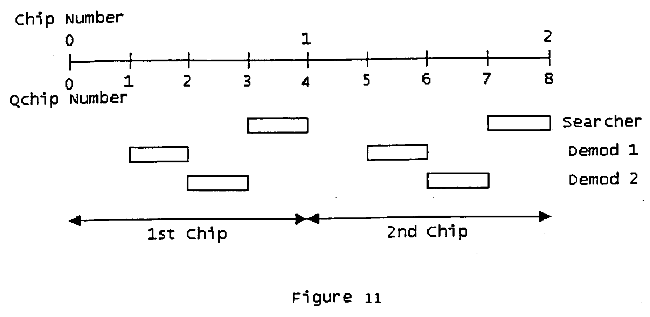

During searching or signal demodulation the incoming samples are multiplied by the PN sequences and Walsh code at chip rate, but the array processor 1 runs at quarter-chip rate. The processing elements 2 therefore process every fourth input sample on the correct quarter chip within each chip period. This is accomplished by controlling the clock to each column 11 so that processing only takes place on the correct quarter-chip. The columns are therefore working on a one-in-four duty cycle although, in general, each column will operate in a different quarter-chip phase, as illustrated by the timing diagram of Figure 11, in which the Demod1 column is demodulating a signal in quarter-chip 1 and the Demod2 column is demodulating a signal in quarter-chip 2. The Searcher is looking for a signal in quarter-chip 3.

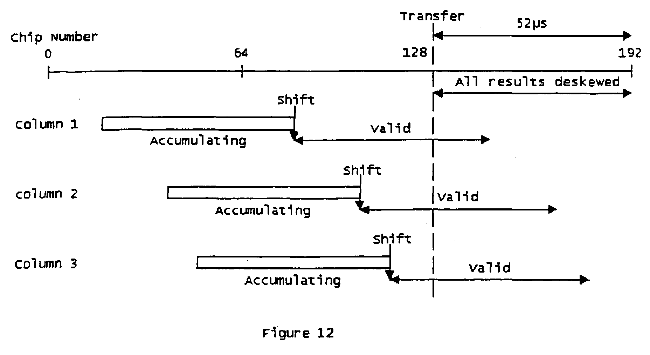

Any integral chip offset for a particular signal component is accounted for by setting a different PN sequence offset for the column 11 dealing with that component. However, the demodulated component will still be skewed relative to the other components so the buffer 4 of the array processor 1 is able to deskew up to 64 chips as shown in Figure 12, any greater offset being dealt with by the host processor. 64 chips is a single Walsh symbol and an element 2 performing demodulation sums these 64 chips to derive a value for the data bit spread by this Walsh symbol. The resulting summations are clocked into a shift register in the buffer 4 at the bottom of each column on each 64th chip. The deskew between 64-chip symbols means that the shift registers will load into the buffer at different times through the 64-chip cycle. However, at the beginning of each 64-chip cycle all the shift registers contain values which have zero relative skew. The shift register contents are therefore transferred at this point into holding registers. The integral chip offset is thus eliminated and the various components deskewed to 64-chip resolution.

In Figure 12, three columns 11 are demodulating three signal components with different PN sequence offsets, so the Walsh symbol in each column 11 is being accumulated out of phase with the others. At the end of each accumulation the result is shifted into the shift register at the bottom of the column. The next accumulation starts immediately, but the shifted value is valid in the shift register for the whole of the accumulation. These valid periods, for all the demodulating columns, overlap and are all valid together once every 64 chips. They are transferred at this point into holding registers where they are valid, and deskewed, for the next 64 chips, or 52$\mu$s, until the next set of accumulated values is ready. The only constraint on the host processor is that it must read and process these values before the end of the 64-chip period. Typically, the host processor will read the values (which are complex numbers, consisting of an i and q component), derotate each one of them, add the components together, delay them as necessary, by whole Walsh symbol periods, and then combine them.

The array processor 1 described above is able to perform both searching and demodulation. Each column 11 of processing elements 2 is able to run in either searcher or demodulator mode, and the mode of each column may be set independently of the others.

The PN sequence generators must be set up with the PN sequences to be used, and the PN sequence memories, if used, loaded with the PN sequences. Each column is then configured to operate in the appropriate mode.

Any number of columns 11 may be used together in searching mode. Each column 11 has its PN sequence offset set independently and searches over a number of chip offsets from the set offset, which depends on the number of processing elements 2 in a column 11. In this example, there are eight elements 2 in a column 11 which means that eight offsets can be searched simultaneously by each column 11. Columns 11 are then have their PN offsets set 8 chips apart, effectively concatenating them to cover a wider range of offsets, but they may also be set to cover several small areas over the space of possible PN offsets. Once the offsets have been set, the number of samples over which the search is to take place is set, the columns 11 participating are cleared and the search begins. After the appropriate number of samples has been processed, the search stops and the results may be read into the host processor. These results are read by changing the mode of the processing elements 2 and shifting the results down through the columns 11 to the buffer 4 at bottom of the array where they are collected and read by the host processor. The results are then processed to represent the power of any detected pilot tone as a function of PN sequence offset, at quarter-chip resolution. The host processor then concatenates and interleaves the results with other search results to form a graph which is scanned to find the peaks representing detected pilot tones. There may be several of these, corresponding to various multi-path components and different base stations.

The searching process may then be repeated in order to collect several sets of results which may be added non-coherently to remove the effect of carrier frequency errors. Once the various pilot tones, and therefore the matching PN offsets, have been found, the number of columns 11 used for searching us reduced and a small number of columns 11 used to keep track of pilot tones for the selected components, while the others are used for signal demodulation.

In demodulation mode, each column 11 handles one signal component, and the columns 11 are therefore analogous to the fingers of a conventional rake receiver. In this example there are sixteen columns 11, and therefore a maximum of sixteen different components which can be demodulated simultaneously. This corresponds to the number of fingers in a conventional rake processor. Only one processing element 2 is needed from each column 11 to perform demodulation, which is a much less computationally demanding task than searching. In this example the bottom element 2 of each column 11 is used, and the rest are may be switched off by disabling their clocks.

The host processor is required to read one complex value from each active column each Walsh symbol period, which is 64 chips, or 52μs. It may then be necessary to delay these values by one or two Walsh symbol periods, derotate them, and then add them together to form the received signal. This is quite an intensive process, and in some systems it may be desirable to move this work into an extra block added to the array processor 1, dependant on the power of the host processor. If the host processor is a 100Mips core or better it is likely to be able to cope with the requisite rate of processing.

The PN sequence offset and carrier phase will, in general, change with time because of inaccuracies in tuning and multi-path and Doppler effects. It is necessary to track each component in order to maintain up-to-date values for offset and phase. As these change relatively slowly, one or more columns of processing elements 11 are reserved for this task, carrying out a limited search in the immediate vicinity of each pilot tone to update these values for each component. New values for PN offset are written to the array processor as required and new carrier phase values are applied directly by the host processor. A slow search is also be carried out for neighbouring base stations to prepare for possible hand-offs. The number of searching columns and demodulating columns can be varied according to the current conditions.

The array processor 1 described above has a number of advantages. In particular the processor 1 is able to complete searches in a reasonable time whilst having a relatively small gate count and low power consumption, as well as performing demodulation tasks.

**Claims**

1.  An array processor (1) for processing a CDMA signal comprising:

    means for generating offset spreading sequences;
    a plurality of processing elements (2) arranged in a plurality of columns (11);
    means for providing a sampled CDMA signal to the columns (11), the elements (2) of each column (11) receiving the signal in parallel; and
    a controller (3) for providing a code signal for each column (11), the code signals being clocked serially down each column (11);
    wherein the code signals include offset spreading sequences and each element (2) correlates samples of the CDMA signal with the code signals.

2.  The array processor (1) of claim 1, wherein the controller (3) further comprises means for generating user codes and the controller (3) selectively provides code signals comprising a combination of a user code and the offset spreading sequences.

3. The array processor (1) of claim 1, wherein each element (2) is a serial processor.

4. The array processor (1) of claim 1, wherein the means for providing the sampled CDMA signal provides the sampled CDMA signal and its inverse to the columns (11).

5. The array processor (1) of claim 1, wherein the controller (3) selectively turns off all but one element (2) of a column (11) when that column is used to demodulate a component of the CDMA signal.

6. The array processor (1) of claim 1, wherein the means for generating offset spreading sequences comprises:

   a generator (15) for generating a reference PN sequence having an inserted extra zero bit; and
   means for shifting the reference PN sequence to generate an offset PN sequence for the control signal for each column (11),
   wherein the means for shifting the reference PN sequence advances and retards the reference PN sequence in order to delete the inserted extra zero bit, and inserts an extra zero bit in each offset PN sequence.

7. The array processor of claim 1, wherein the means for generating offset spreading sequences comprises:

   a memory for storing a PN sequence; and
   means for addressing the memory to retrieve the PN sequence at the desired offset.

8. The array processor of claim 2, wherein the means for generating user codes comprises means for combining Walsh codes having lengths whose product equals N to provide user codes comprising Walsh codes of length N.

9. A method of processing a CDMA signal comprising the steps of:

   generating offset spreading sequences;
   providing a sampled CDMA signal to a plurality of columns (11) of processing elements (2), the elements (2) of each column receiving the signal in parallel;
   providing a code signal to each column (11) and clocking the code signals serially down each column (11);
   wherein the code signals include the offset spreading sequences and each element (2) correlates samples of the CDMA signal with the code signals.

10. The method of claim 9, further comprising the steps of:

    generating a user code; and
    selectively providing code signals comprising a combination of a user code and the offset spreading sequences.

11. The method of claim 9, further comprising the step of providing the inverse of the sampled CDMA signal to the processing elements (2).

12. The method of claim 9, further comprising the step of selectively turning off all but one element (2) of a column (11) when that column is used to demodulate a component of the CDMA signal.

13. The method of claim 9, wherein the step of generating offset spreading sequences comprises the steps of:

    generating a reference PN sequence having an interpolated extra zero bit; and
    shifting the reference PN sequence to generate an offset PN sequence for the control signal for each column (11),
    wherein the reference PN sequence is advanced and retarded in order to delete the interpolated extra zero bit, and an extra zero bit is interpolated in each offset PN sequence.

14. The method of claim 9, wherein the step of generating offset spreading sequences comprises the step of:

    retrieving PN sequences from a memory at the desired offset.

15. The method of claim 10, wherein the step of generating a user code comprises the step of combining Walsh codes having lengths whose product equals N to provide user codes comprising Walsh codes of length N.

Figure 1

Figure 2

Figure 3

Figure 4

Figure 5

Figure 6

Figure 7

Figure 8

Clocked at chip rate _22

| 8-bit Shift Register |

Walsh
Function

Clocked at chip rate/8

| 8-bit Shift Register |

_23

Figure 9

Figure 10

Chip Number

Qchip Number

1st Chip

2nd Chip

Searcher

Demod 1

Demod 2

Figure 11

Figure 12

**EP 0 945 992 A1**

---

**European Patent Office**

**EUROPEAN SEARCH REPORT**

Application Number

EP 98 30 2392

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | EP 0 668 663 A (NIPPON TELEGRAPH & TELEPHONE) 23 August 1995<br>* column 9, line 20 - column 11, line 24; figures 6,7 *<br>--- | 1,9 | H04B1/707<br>G06F15/80 |
| A | EP 0 661 831 A (NIPPON ELECTRIC CO) 5 July 1995<br>* abstract *<br>* page 3, line 34 - page 4, line 58; figures 1-3 *<br>--- | 1,9 | |
| A | EP 0 675 450 A (IBM) 4 October 1995<br>* abstract *<br>* column 2, line 15 - line 49 *<br>* column 18, line 39 - line 44 *<br>----- | 1,9 | |

| | | | TECHNICAL FIELDS SEARCHED (Int.Cl.6) |
|---|---|---|---|
| | | | H04B<br>G06F |

The present search report has been drawn up for all claims

| Place of search | Date of completion of the search | Examiner |
|---|---|---|
| THE HAGUE | 27 August 1998 | Bossen, M |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)